# FASCICULE DE BREVET EUROPEEN

(11) **EP 0 463 957 B1**
(45) Date de publication et mention de la délivrance du brevet: **20.10.1993**
(21) Numéro de dépôt: 91401711.6
(22) Date de dépôt: 25.06.1991
(51) Int. Cl.: F23J 15/00, B01D 53/34

(54) **Procédé et dispositif pour générer de la chaleur comportant une désulfuration des effluents avec des particules d'absorbant de fine granulométrie en lit transporté**
Verfahren und Vorrichtung zur Wärmeerzeugung mit Entschwefelung von Abgasen durch Absorptionsmittelteilchen feiner Teilchengrösse in einem Wanderbett
Method and device for generating heat with desulfurization of effluents using sorbent particles with a fine particle size in an entrained bed

(30) Priorité: 28.06.1990 FR 9008311
(43) Date de publication de la demande: 02.01.1992
(73) Titulaire: INSTITUT FRANCAIS DU PETROLE, 92502 Rueil-Malmaison (FR); BABCOCK ENTREPRISE, 93123 La Courneuve (FR)
(72) Inventeur: Martin, Gérard, F-92500 Rueil Malmaison (FR); Bouju, Jean-Louis, F-95270 Luzarches (FR)
(74) Mandataire: Andreeff, François

(56) Documents cités:
- EP-A- 0 093 063
- EP-A- 0 211 458
- EP-A- 0 362 015
- DE-A- 3 235 558
- FR-A- 2 575 272
- US-A- 4 277 450

## Description

L'invention a pour objet un procédé et un dispositif pour générer de la chaleur à partir de la combustion d'un combustible à hautes teneurs en soufre et en azote, avec des émissions réduites d'oxydes de soufre, d'oxydes d'azote et de composés combustibles imbrulés. Plus spécialement, l'invention a pour objet le controle et l'optimisation de la désulfuration en lit entrainé dans un générateur de chaleur.

Dans les zones protégées, les réglementations sévères limitent les émissions d'oxydes de soufre par les effluents gazeux des générateurs de chaleur et y interdisent l'emploi de combustibles à haute teneur en soufre, qui, par ailleurs, peuvent présenter des avantages économiques certains :
il en est ainsi de certains charbons s'apparentant aux lignites, et de résidus pétroliers issus des procédés de raffinage.

L'arrière plan technologique est illustré par les brevets US-A-4277450, EP-A-0093063, EP-A-0211458 et DE-A-3235558. Il est également connu le brevet EP-A-0362015 qui décrit un dispositif pour générer de la chaleur en lit transporté sans recyclage des particules d'absorbant. Par contre, le brevet FR 2575272 décrit un procédé avec recyclage des particules dans la chambre de combustion où s'effectuent à la fois la combustion et la désulfuration du combustible. Aucun de ces brevets ne suggère le problème technique mentionné ci-dessous.

Il est connu selon le brevet français 2636720 de réduire les émissions d'oxydes de soufre et particulièrement celles de dioxyde de soufre provenant d'un générateur de chaleur acceptant des combustibles à haute teneur en soufre. Il est en effet utilisé la combinaison de trois éléments principaux, formant un ensemble compact : une chambre de combustion à parois froides, une chaudière de récupération captant la chaleur sensible des gaz de combustion et des particules en circulation et un lit transporté intermédiaire sans surface d'échange interne notable et dont la fonction est de désulfurer les gaz transitant entre le foyer amont et l'échangeur aval.

Le problème technique en effet généralement rencontré dans ce type de générateur de vapeur consiste en ce que la très grande majorité des chaudières est appelée à fonctionner à des allures variables, de façon à adapter la production de vapeur à la demande. Toute modification de l'allure de la chaudière, c'est-à-dire toute modification des débits d'air et de combustible s'accompagne inévitablement d'une variation des profils thermiques à l'intérieur même de la chaudière, car les coefficients d'échange de chaleur, convectif et a fortiori radiatif, ne sont pas directement proportionnels au débit de fumées parcourant les surfaces d'échange.

Dans le cas du générateur de chaleur décrit dans le brevet FR 2636720, une diminution de l'allure entraine un abaissement de la température moyenne de la chambre de désulfuration. Cet abaissement peut être de 200 voire 300°C, quand la production de chaleur du générateur est inférieure à 30 % de celle du régime nominal. La chambre de désulfuration devant opérer dans une plage de température qui peut être assez étroite avec certains types d'absorbant (par exemple 850 à 950°C pour certains calcaires), les performances de désulfuration risquent d'être fortement altérées aux allures réduites. Il est connu que les variations de température peuvent être considérablement réduites en pratiquant dans le foyer un recyclage de fumées prélevées après la dernière zone d'échange. Cette solution pourrait s'envisager pour résoudre le problème du maintien de la température dans la chambre de désulfuration, mais elle implique des investissements relativement lourds difficilement supportables pour une chaudière de taille industrielle, ayant une puissance de quelques mégawatts à quelques dizaines de mégawatts.

Pour maintenir la température de la chambre de désulfuration, ou pour éviter un abaissement trop important quand on réduit l'allure, la solution proposée consiste à recycler, non plus des gaz, mais une partie au moins de l'absorbant usagé qui est récupéré en aval de l'échangeur terminal.

On a découvert un procédé permettant de répondre au problème ci-dessus et en particulier permettant d'obtenir des vitesses de désulfuration rapides, et d'accroitre le taux d'utilisation de l'absorbant, à un cout moindre, quelle que soit l'allure de fonctionnement du générateur de chaleur.

Un autre objet de l'invention est de maintenir la température de la chambre de désulfuration des fumées résultant de la combustion du combustible à un niveau compatible avec le fonctionnement optimal du générateur quelle que soit l'allure de celui-ci.

De manière plus précise, on a découvert un procédé de génération de chaleur avec des émissions réduites d'oxydes de soufre, d'oxydes d'azote et de composés combustibles imbrulés, dans lequel :
a) on effectue une combustion d'une quantité variable d'un combustible contenant du soufre et de l'azote, dans une zone de combustion comprenant une zone d'échange de chaleur dans laquelle on extrait au moins en partie de la chaleur, ladite combustion étant effectuée en présence d'un gaz contenant de l'oxygène dans des conditions sensiblement proches de la stoechiométrie de la combustion et on récupère des effluents de combustion à une température comprise entre 800°C et 1200°C,
b) on introduit les effluents de combustion et des particules d'un absorbant frais, renfermant au moins un composé basique d'un métal alcalino-terreux dans au moins une zone de turbulence en amont d'une zone de désulfuration, lesdites particules ayant une granulométrie de 1 à 100 micromètres et une masse volumique comprise entre 500 et 4000 kg/m3,
c) On effectue, dans la zone de désulfuration, une désulfuration desdits effluents, en présence desdites particules, en lit transporté et en atmosphère oxydante dans des conditions telles que la teneur en oxygène à la sortie de la zone de désulfuration soit comprise entre 0,1 et 5 % en volume, lesdits effluents ayant une vitesse superficielle en sortie de la zone de désulfuration comprise de préférence entre 2 et 20 m/s, et on produit un mélange renfermant lesdites particules comprenant des composés soufrés de désulfuration et un effluent gazeux désulfuré,
d) on envoie ledit mélange dans une zone de récupération de chaleur, on extrait au moins une partie de la chaleur dudit mélange, et on récupère éventuellement une partie au moins des particules d'absorbant,
e) on sépare le mélange résultant de l'étape d) dans une zone de séparation et on évacue d'une part l'effluent gazeux au moins en partie refroidi et débarrassé de la majeure partie des oxydes de soufre, des oxydes d'azote et du combustible imbrulé, et d'autre part lesdites particules d'absorbant comprenant une partie au moins desdits composés soufrés (appelées particules usagées). Un tel procédé est connu du EP-A- 362 015.

Ledit procédé est caractérisé en ce qu'on recycle lors de l'étape b) une partie au moins des particules issues de l'étape e) et éventuellement de l'étape d), en amont de la zone de turbulence, dans des conditions telles que la température de la chambre de désulfuration soit comprise entre 750 et 1000°C (plage de fonctionnement optimal).

Le découplage complet de la combustion et de la désulfuration se réalisant dans deux enceintes distinctes, permet d'optimiser séparément chacune des deux fonctions. En effet, la combustion se réalise sous très faible excès d'air, voire en défaut d'air, en général entre 90 et 110 % de la stoechiométrie de la combustion et avantageusement entre 96 et 104 % de la stoechiometrie. On réduit ainsi la production d'oxydes d'azote aux dépens d'une quantité accrue de produits combustibles imbrulés qui seront brulés dans la zone de désulfuration.

Les particules d'absorbant introduites finalement lors de l'étape b) contiennent une partie de particules fraiches (non usagées et à une température voisine de l'ambiante) et une partie de particules usagées qui ont été recyclées quelle que soit l'allure du générateur et qui sont adaptées à refroidir les effluents de combustion.

L'utilisation d'absorbant, se présentant sous la forme de grains fins, avantageusement compris entre 5 et 25 micromètres, permet l'obtention de vitesses de désulfuration élevées et l'augmentation du taux d'utilisation du calcium ou du magnésium contenu dans l'absorbant.

Selon une caractéristique de l'invention, les particules dites fraiches sont habituellement à une température sensiblement voisine de la température ambiante.

Selon une autre caractéristique de l'invention, la température des particules recyclées est en général comprise entre la température ambiante et 400°C et de préférence entre 50 et 150°C.

Selon une autre caractéristique de l'invention, le débit d'absorbant recyclé aussi bien en allure nominale qu'en allure réduite du générateur est en général compris entre 0,01 et 15 fois le débit d'absorbant frais injecté dans la chambre de désulfuration et de préférence entre 2 et 8 fois.

Au fur et à mesure que l'allure de la chaudière est réduite, on abaisse le débit d'absorbant recyclé. La loi d'abaissement est choisie par l'utilisateur.

Elle peut être linéaire ou de type polynomiale. Elle dépend principalement de la plage de fonctionnement optimale de l'absorbant utilisé et de la souplesse maximale qui est demandée au générateur de vapeur. Cette souplesse est caractérisée par le rapport de la puissance en marche nominale sur la puissance en marche minimale (par exemple, une souplesse de 4/1 signifie que l'on peut faire fonctionner la chaudière à 25% de la puissance en marche nominale).

Les surfaces d'échange du générateur localisées dans la chambre de combustion en amont de la chambre de désulfuration sont calculées de façon à ce que la température de fonctionnement de la chambre de désulfuration en régime nominal corresponde sensiblement à la borne supérieure de la plage de température optimale pour la désulfuration.

Par température de fonctionnement de la chambre de désulfuration, on entend la moyenne de la température à l'entrée de la chambre de désulfuration après mélange avec l'absorbant et de la température de sortie de la chambre de désulfuration.

L'abaissement de l'allure de la chaudière se traduira généralement par un abaissement de la température, mais grace au procédé envisagé, la température sera en général contenue dans la plage de température optimale, c'est-à-dire qu'elle ne dépassera pas par exemple 200°C dans le pire des cas.

Un autre avantage du procédé est qu'il permet d'obtenir une meilleure utilisation de l'absorbant par rapport à l'option sans recyclage. Le recyclage assure en effet un temps de séjour total de l'absorbant dans la chambre de désulfuration plus important. Par ailleurs, il a été observé que l'absorbant pouvait reprendre une certaine quantité d'humidité lors de l'étape de dépoussiérage finale et que cette humidité favorisait le développement d'une surface réactionnelle supplémentaire lorsque l'absorbant était réinjecté dans la chambre de désulfuration. En résume, il est préférable par exemple d'avoir cinq séjours successifs d'une seconde de l'absorbant dans la chambre de désulfuration, ces séjours étant entrecoupés d'une reprise partielle d'humidité, plutôt qu'un séjour unique de cinq secondes sans reprise d'humidité intermédiaire.

Le recyclage a aussi un effet bénéfique sur le rendement de désulfuration à rapport molaire Ca/S constant, puisqu'il permet d'accroitre la quantité de matière active présente dans la chambre de désulfuration.

En marche réduite, le débit de recyclage est abaissé, mais le temps de séjour moyen total de l'absorbant dans l'unité reste sensiblement le même, par suite d'une diminution de la vitesse des gaz dans la chambre de désulfuration. Dans certains cas il peut même être supérieur à celui de la marche nominale, si le débit de fumées décroit dans des proportions plus importantes que le taux de recyclage. De cette façon, les performances de désulfuration peuvent être maintenues constantes pour toute allure de la chaudière sans faire appel à un accroissement du rapport Ca/S comme c'est généralement le cas dans l'option sans recyclage.

Un autre avantage du procédé resulte du fait qu'en présence d'un recyclage des particules selon l'invention, la concentration moyenne des particules est plus grande, bien qu'elles soient en partie usagées et donc bien que la disponibilité en calcium de certaines d'entre elles soit plus faible que celles des particules fraiches. Par conséquent, on peut obtenir les mêmes résultats en un temps plus court. En d'autres termes, on peut utiliser un réacteur de désulfuration de volume réduit et donc diminuer les investissements.

Selon une autre caractéristique de l'invention on peut avant l'étape de réinjection des particules recyclées dans la chambre de désulfuration traiter l'absorbant usagé à la vapeur ou à l'eau dans des conditions appropriées afin d'augmenter la reprise d'humidité. Cette opération peut s'effectuer par tout dispositif connu de l'homme de l'art, notamment par un mélangeur à étages.

Selon une autre caractéristique du procédé selon l'invention, l'étape de désulfuration est effectuée en général avec une concentration de particules fraiches et recyclées dans l'effluent gazeux de combustion et dans le gaz comburant comprise entre 0,02 et 1 kg/Nm3 de fumées et de gaz et de préférence entre 0,05 et 0,2 kg/Nm3 (N : normal, c'est-à-dire à 0°C et 1 atmosphère).

Le temps de séjour des particules dans la zone de désulfuration est en règle générale de 0,5 à 10 s et de préférence de 1 à 2 s.

On peut introduire de l'ammoniac ou de l'urée dans la chambre de désulfuration, de préférence en amont, pour augmenter si nécessaire la dénitrification des effluents de combustion. De même, on peut rajouter de l'air pour que la désulfuration soit effectuée en atmosphère d'oxygène, si l'étape de combustion n'est pas réalisée en excès d'air.

La zone de turbulence, de préférence en amont de la chambre de désulfuration, induit une turbulence favorisant le mélange intime des particules fraiches et recyclées et des gaz dans le lit transporté.

Cette zone de turbulence peut être créée par tout moyen connu de l'Homme de métier ; par exemple, on peut utiliser des orifices, des venturi, des diaphragmes, un milieu poreux.

Les absorbants les plus fréquemment utilisés sont la chaux éteinte, les calcaires (CaCO3) ou les dolomies (CaMg(CO3)2) utilisés seuls ou en mélange. On pourra également utiliser des produits de cimenterie pris avant leur cuisson et de fine granulométrie.

L'invention concerne aussi un dispositif notamment pour la mise en oeuvre du procédé. Ce dispositif (voir figure) comprend de manière plus précise une chambre (1) de combustion avec une sortie (5), des moyens de combustion (2) d'un combustible dans ladite chambre de combustion, des premiers moyens de récupération de chaleur (4) dans ladite chambre de combustion, une chambre de désulfuration sensiblement adiabatique (8) avec une entrée (7) reliée à la sortie (5) de la chambre de combustion et une sortie (14), une chambre de récupération de chaleur (16) reliée à la sortie (14) de la chambre de désulfuration, ayant une sortie (21), et une chambre de séparation (22) d'un effluent gazeux désulfuré des particules d'absorbant au moins en partie usagées, reliée à la sortie (21) de la chambre de récupération de chaleur, la chambre de désulfuration ayant au moins une paroi (13) commune avec la chambre de combustion et au moins une paroi (15) commune avec la chambre de récupération de chaleur (16), ladite entrée (7) de la chambre de désulfuration comprenant des moyens d'alimentation (10) en particules d'absorbant frais et des moyens (9) pour induire de la turbulence dans la circulation des particules. Un tel dispositif est connu du EP-A-362 015.

Le dispositif est caractérisé en ce qu'il comporte des moyens (50, 41, 10) de recyclage de particules d'absorbant au moins en partie usagées à l'entrée (7) de la chambre de désulfuration et des moyens (43, 46) d'ajustement et de contrôle du débit de particules d'absorbant recyclées et du débit de particules d'absorbant frais, l'ensemble de ces moyens étant adaptés à coopérer pour que la chambre de désulfuration soit sensiblement en fonctionnement optimal.

Par chambre de désulfuration sensiblement adiabatique, on entend une chambre n'échangeant pratiquement pas de chaleur avec le milieu extérieur ou les chambres adjacentes ni par ses parois, ni par des échangeurs au sein même du lit entrainé. L'abaissement de température entre l'entrée et la sortie de ladite chambre sera généralement faible pour que, à la température de sortie de ladite chambre, la réaction de désulfuration ait encore une éfficacité suffisante (par exemple à une température de sortie de 750°C).

Selon une caractéristique de l'invention, les moyens de recyclage comprennent au moins une vanne 40 de régulation de débit reliée à la sortie de la chambre de séparation 22 et/ou à une sortie d'une enceinte de stockage et/ou à une sortie inférieure de la chambre de récupération de chaleur, ladite vanne étant reliée à au moins un injecteur de particules 10 par une conduite de liaison 41.

Selon une autre caractéristique de l'invention, les moyens d'ajustement et de controle du débit de particules usagées comprennent des moyens d'asservissement reliés à une sonde de température dans la chambre de désulfuration et à la vanne de régulation du débit de particules.

Selon un mode de réalisation particulier, la sortie de la chambre de combustion peut comprendre un passage continu relié à l'entrée de la chambre de désulfuration, ledit passage contenant les moyens d'alimentation en particulier en particules d'absorbant frais et recyclé. L'ensemble de ces moyens sont adaptés à une circulation à co-courant des gaz effluents de combustion et de l'absorbant dans la chambre de désulfuration.

Selon une autre caractéristique du dispositif, la chambre de désulfuration et la chambre de récupération de chaleur ont une paroi commune qui peut comporter au moins un orifice adapté au passage de l'effluent gazeux désulfuré et des particules d'absorbant dans l'entrée de la chambre de récupération de chaleur.

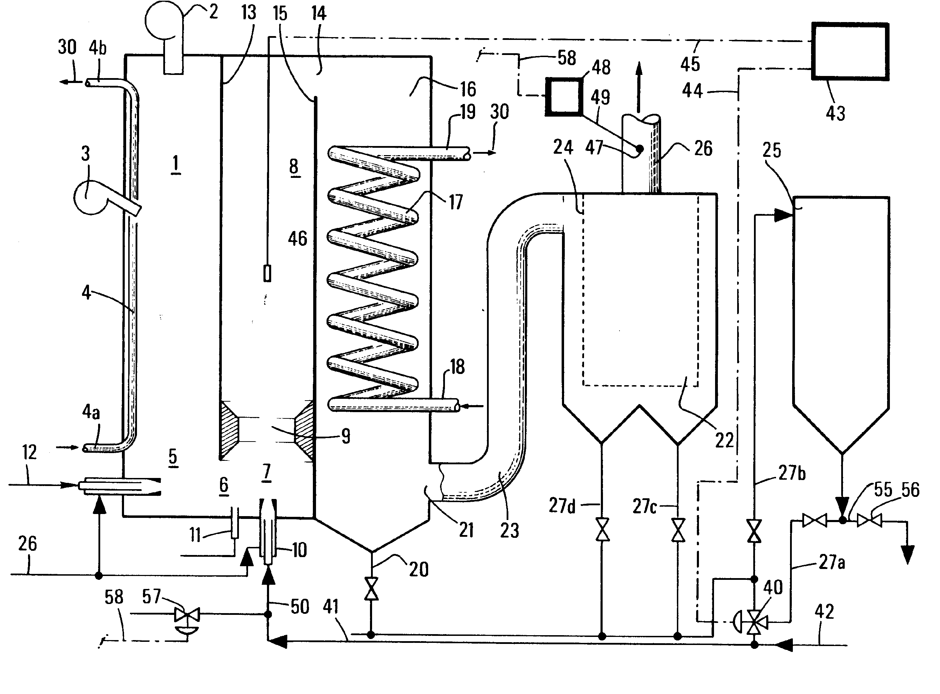

L'invention sera mieux comprise et ses avantages apparaitront plus clairement à la lecture de la description qui suit d'un exemple particulier, nullement limitatif, illustré par la figure unique ci-annexée.

Elle représente un dispositif selon l'invention comportant une chambre de combustion 1, allongée de section carrée ou rectangulaire, de préférence verticale, pouvant bruler n'importe quel type de combustible solide ou liquide contenant du soufre et de l'azote, injecté sous forme pulvérisée dans la chambre 1 jar un bruleur 2 alimenté en gaz comburant. Ce bruleur est avantageusement disposé selon l'axe de la chambre et à la partie supérieure de celle-ci.

Ce combustible peut être un résidu sous vide, un asphalte fluxé, des combustibles solides, des combustibles composites fuel/charbon, des suspensions charbon/eau, etc. ...

Le combustible est brûlé sans excès d'air, afin de réduire au maximum la formation d'oxydes d'azote. Au cours de la combustion, on prélève une partie de l'énergie libérée par les tubes 4 d'échange afin que la température des effluents gazeux de combustion se situe entre 800°C et 1200°C. Ces derniers quittent la sortie 5 à l'extrémité inférieure de cette chambre et circulent à travers un passage 6 avant d'atteindre l'entrée 7 d'une chambre de désulfuration sensiblement adiabatique dont les parois peuvent comprendre des tubes-membranes éventuellement recouverts partiellement ou en totalité de matériaux isolants.

Disposé dans le passage, un injecteur 10 introduit par une ligne d'alimentation 50 des particules d'absorbant frais ou des gouttelettes dans le cas d'une suspension de calcaire par exemple, dans la chambre de désulfuration.

Le même injecteur introduit aussi de l'absorbant usagé recyclé par une ligne 41 reliée à la ligne 50. La ligne de recyclage 41 est connectée à une écluse rotative 40 (ou tout autre moyen connu de l'Homme de l'art assurant la même fonction), elle-même reliée à une ligne de sortie 27a d'une enceinte de stockage 25 et/ou à une ligne de sortie 27c de la chambre de séparation et/ou éventuellement à une ligne de sortie 20 connectée à l'extrémité inférieure de la chambre de récupération de chaleur.

Le débit de particules recyclées est délivré par la vanne 40 qui est asservie par une ligne 44 grâce à des moyens d'asservissement 43, à une mesure de température donnée par une sonde 46 située dans la chambre de désulfuration, cette sonde étant reliée par une ligne 45 aux moyens d'ajustement et de controle 43.

L'absorbant recyclé est envoyé pneumatiquement vers la chambre de désulfuration par la ligne 41 alimentée en gaz vecteur (air ou vapeur) par la ligne 42. Ainsi, la somme des refroidissements dans la chambre de combustion et à l'entrée de la chambre de désulfuration, par l'introduction de particules fraiches vers 20°C et de particules recyclées usagées à une température par exemple de 100°C, est en règle générale sensiblement proportionnelle à la puissance libérée par le brûleur.

Des particules, de granulométrie centrée autour de 15 micromètres, circulent à co-courant avec les effluents de combustion. En sortie de la chambre, ces derniers, désulfurés, sont animés d'une vitesse de 2 à 20 m/s. Le débit des particules est tel qu'il conduit à des concentrations comprises entre 0,05 et 0,2 kg par m3 normal de gaz.

Dans le passage 6 peut également être adjoint un injecteur d'ammoniac 12 alimentant la chambre 8 dans la direction de l'écoulement pour compléter la dénitrification des effluents, les oxydes d'azote étant transformés en azote moléculaire.

Les deux injecteurs fonctionnent avec de l'air comprimé ou de la vapeur, apporté par les lignes 26, afin d'assurer une bonne dispersion spatiale de l'absorbant ou de l'ammoniac.

Dans le cas de l'utilisation de vapeur pour les injecteurs ou si l'air utilisé pour la dispersion par les différents injecteurs n'est pas suffisant pour assurer une combustion complète des composés combustibles imbrûlés, on peut envisager une injection complémentaire dans le même passage 6 par un injecteur d'air 11.

Tous ces injecteurs sont avantageusement situés en amont d'un venturi 9, bien qu'au moins un de ceux-ci, disposé dans le venturi même ou en aval de celui-ci, ne soit pas à exclure.

L'entrée de la chambre 8 de désulfuration comprend avantageusement le venturi 9 adapté à induire de la turbulence au flux de particules et de gaz traversant cette entrée et à favoriser leur mélange.

La chambre de désulfuration, de forme allongée et de section carrée ou rectangulaire, dans laquelle remonte le mélange de particules et d'effluents gazeux est adjacente à la chambre de combustion. Leur paroi commune 13 n'est pas ou peu refroidie.

La température du lit de particules ainsi constitué ou lit transporté est maintenue entre 750 et 1000°C. Cette chambre est sensiblement adiabatique et la désulfuration des effluents est effectuée durant leur séjour dans la chambre de désulfuration, les oxydes de soufre, S02 en particulier, étant transformés en sulfate. Le temps de séjour est par exemple d'environ 1 s.

Les effluents désulfurés et les particules d'absorbant quittent la chambre de désulfuration par une sortie 14 à l'extrémité de cette chambre et sont dirigés vers une chambre de récupération 16 de chaleur adjacente à la précédente. La paroi commune aux deux chambres comprend à son extrémité supérieure 15 un orifice de sortie 14 par lequel s'effectue le passage des particules et des gaz.

La chambre de récupération de chaleur 16, de forme allongée et de section carrée ou rectangulaire, dans laquelle descend le mélange, comprend des tubes échangeurs de chaleur 17 disposés par exemple selon un tracé sinueux le long de l'axe de la chambre 16. Ces tubes sont alimentés en eau en 18 et ils ont une sortie 19 d'eau et de vapeur communiquant avec une capacité sous pression 30. L'agencement des tubes est tel que la température du mélange solides-gaz quittant la chambre 16 se situe entre 120°C et 400°C.

A la base de la chambre 16 se trouve un dispositif d'extraction 20 de solides permettant de retirer éventuellement une partie au moins de l'absorbant qui se serait déposé sur les tubes et qui aurait été éliminé par ramonage. Cet absorbant peut être recyclé comme il a été dit ci-haut à l'entrée 7 de la chambre de désulfuration par les moyens appropriés décrits ci-dessus.

Le mélange solide-gaz refroidi quitte la chambre 16 par une sortie 21 à l'extrémité inférieure de celle-ci et est séparé dans une chambre de séparation 22 reliée à la sortie 21 par une ligne de transfert 23. Cette chambre 22 comprend par exemple un filtre à manches 24 par lequel les particules d'absorbant usagé, à base de sulfates, sont recueillies et les gaz effluents dépoussiérés et débarrassés de la majeure partie des oxydes de soufre et d'azote, rejetés à l'atmosphère par une ligne 26 reliée à la partie supérieure de la chambre 22. Les particules sont dirigées vers une trémie de stockage 25 par une ligne 27 reliée à la partie inférieure de la chambre de séparation 22 et éventuellement au dispositif d'extraction 20. A l'extrémité inférieure de l'enceinte 25, une ligne de soutirage 55 contrôlée par une vanne 56 permet d'extraire une partie de particules d'absorbant usagées.

Le taux d'émission, notamment en soufre, est contrôlé par un détecteur 47 spécifique à lumière infra rouge par exemple, localisé dans la ligne de sortie des éffluents épurés 26. Ce détecteur est relié par une ligne 49, à des moyens d'asservissement 48, qui sont adaptés à reguler par une ligne 58, une vanne 57 de débit de particules fraiches destinées à être injectées dans la chambre de désulfuration 8 par l'injecteur 10.

Lorsque la teneur en S02 des effluents déterminée par exemple par le détecteur 47 dépasse la plage affichée dans les moyens d'asservissement 48, un signal électrique est envoyé à la vanne de débit 57 qui permet l'entrée d'une plus grande quantité de particules d'absorbant frais dans la chambre de désulfuration et de ce fait la teneur en S02 des effluents va diminuer.

Lorsque la demande en vapeur est importante, la quantité de combustible brûlé est telle que la température de la chambre de désulfuration a tendance à dépasser la plage d'utilisation optimale du générateur. Les moyens d'ajustement et de contrôle 43 reliés à la sonde de mesure de température 46 envoient alors un signal électrique à la vanne 40 qui envoie un recyclage plus important de particules usagées de façon à refroidir la chambre de désulfuration et de façon à ce que la désulfuration soit effectuée dans des conditions optimales.

Au contraire, à allure réduite, la température décroit et grâce aux mêmes moyens décrits ci-dessus, la vanne est opérée de façon à réduire le taux de particules recyclés devant refroidir les effluents de combustion de façon à ce que la désulfuration s'effectue dans la gamme de température correspondant à une utilisation optimale de l'absorbant.

Ainsi, les effluents de combustion, après avoir parcouru selon un cheminement en S les trois chambres 1, 8 et 16 dont celle du milieu 8 est adjacente aux deux autres, se trouvent être très rapidement dépollués.

Si nécessaire, la chambre de désulfuration peut être équipée d'internes destinés à augmenter le temps de séjour des particules d'absorbant et à accrôitre leur efficacité. Par internes, on entend par exemple des anneaux de Raschig, ou de Pall, empilés dans l'enceinte, des particules de 0,15 à 10 cm de granulométrie supportés par une grille et/ou des aménagements supportés par la paroi de la chambre qui favorisent la turbulence (restrictions de section disposés le long de la chambre par exemple).

L'invention sera mieux comprise au vu des exemples comparatifs suivants à allures nominale et réduite illustrant le procédé.

### * Cas n°1. selon l'art antérieur

Une chaudière brûle 5 t/h d'un combustible à 5% de soufre. L'excès d'air est de 15%. L'absorbant utilisé est de la chaux éteinte commerciale à 95% de Ca(OH)2 avec une granulométrie moyenne de 8 micromètres. La plage de température optimale de l'absorbant définie par un test de laboratoire est comprise entre 830 et 980°C. La chambre de désulfuration est constituée de parois membranées.

On obtient un rendement de désulfuration de 80% lorsque le temps de séjour des gaz dans la chambre de désulfuration est de 2s et quand le rapport molaire Ca/S des débits d'absorbants et fumées est de 2,5. La température de fonctionnement de cette chambre en marche nominale est de 970°C et l'abaissement de température entre l'entrée et la sortie de ladite chambre est de 40°C. Le taux d'utilisation de l'absorbant (rapport molaire du calcium utilisé sur le calcium initialement introduit) est donc de 32%.

Lorsque l'allure de la chaudière est réduite de 75%, la température à l'entrée de la chambre de désulfuration après mélange de l'absorbant n'est plus que de 750°C, de sorte que la désulfuration se déroule plus difficilement. Ces moins bonnes performances sont dues à des cinétiques réactionnelles plus faibles et à une recarbonatation de la chaux. Pour maintenir le rendement de désulfuration à 80%, il est nécessaire d'accroître la quantité de calcium consommée dans des proportions telles que le rapport Ca/S soit alors de 3,8 avec un taux d'utilisation de 21%.

### * Cas n°2. selon l'invention

La chaudière envisagée brûle toujours la même quantité de combustible et utilise les mêmes fuel et absorbant. Le volume de la chambre de désulfuration a été réduit de moitié de sorte que le temps de séjour des gaz en marche nominale n'est plus que de 1s. La température des particules d'absorbant frais est d'environ 20°C alors que celle des particules recyclés est d'environ 105°C. L'ensemble des particules est injecté en présence d'air. On obtient un rendement de désulfuration des fumées de 80% avec un rapport molaire Ca/S réglé à 1,8 et avec un taux de recyclage de 6. La température de fonctionnement est de 970°C en marche nominale. Le taux d'utilisation de l'absorbant est de 44,5%. Quand l'allure de la chaudière est réduite de 75%, le taux de recyclage des particules est abaissé à 0,5.La température de la chambre de désulfuration est alors tombée à 840°C, mais reste dans la plage de fonctionnement optimale. L'abaissement du taux de recyclage est presque totalement compensée par un allongement des temps de séjour de l'absorbant dans la chambre de désulfuration, et pour maintenir le rendement de 80%, il suffit d'accroître légèrement le rapport Ca/S jusqu'à 2,0 en augmentant le débit de particules fraîches par rapport au débit de particules recyclées. Le taux d'utilisation est alors de 40%.

La comparaison des cas 1 et 2 montre à l'évidence l'intérêt de la technique qui se traduit par une économie d'absorbant, mais qui permet aussi de réduire les investisseemnts par rapport à la version sans recyclage, grâce en particulier à un volume moindre de la chambre de désulfuration.

## Revendications

1. Procédé de génération de chaleur avec des émissions réduites d'oxydes de soufre, d'oxydes d'azote et de composés combustibles imbrûlés, dans lequel a) on effectue une combustion d'une quantité variable d'un combustible contenant du soufre et de l'azote, dans une zone de combustion comprenant une zone d'échange de chaleur dans laquelle on extrait au moins en partie de la chaleur, ladite combustion étant effectuée en présence d'un gaz contenant de l'oxygène dans des conditions sensiblement proches de la stoechiométrie de la combustion et on récupère des effluents de combustion à une température comprise entre 800 et 1 200°C.
b) on introduit les effluents de combustion et des particules d'un absorbant frais renfermant au moins un composé basique d'un métal alcalino-terreux, dans au moins une zone de turbulence en amont d'une zone de désulfuration, lesdites particules ayant une granulométrie de 1 à 100 micromètres et une masse volumique comprise entre 500 et 4000 kg/m3.
c) on effectue, dans la zone de désulfuration, une désulfuration desdits effluents, en présence desdites particules, en lit transporté, à une température comprise entre 750°C et 1000°C et en atmosphère oxydante dans des conditions telles que la teneur en oxygène à la sortie de la zone de désulfuration soit comprise entre 0,1 et 5% en volume et on produit un mélange renfermant lesdites particules comprenant des composés soufrés de désulfuration et un effluent gazeux désulfuré.
d) on envoie ledit mélange dans une zone de récupération de chaleur, on extrait au moins en partie de la chaleur, et on récupère éventuellement une partie au moins des particules d'absorbant,
e) on sépare le mélange résultant de l'étape d) dans une zone de séparation et on évacue d'une part l'effluent gazeux au moins en partie refroidi débarrassé de la majeure partie des oxydes de soufre, des oxydes d'azote et des composés combustibles imbrûlés, et d'autre part lesdites particules d'absorbant comprenant une partie au moins desdits composés soufrés,
ledit procédé étant caractérisé en ce qu'on recycle à l'étape b) une partie au moins des particules d'absorbant issue de l'étape e) et éventuellement de l'étape d), en amont de la zone de turbulence, et on ajuste le débit de particules d'absorbant frais et le débit de particules recyclées à l'étape b) en fonction de la quantité de combustible brûlé dans la zone de combustion de façon que la température de la chambre de désulfuration soit maintenue entre 750 et 1 000°C.

2. Procédé selon la revendication 1, dans lequel la concentration en particules fraîches et recyclées dans la zone de désulfuration est comprise entre 0,02 et 1 kg/Nm3 et de préférence comprise entre 0,05 et 0,2 kg/Nm3 d'effluents totaux.

3. Procédé selon les revendications 1 ou 2, dans lequel le temps de séjour des particules dans la zone de désulfuration est de 0,5 à 10 s et de préférence de 1 à 2s.

4. Procédé selon l'une des revendications 1 à 3, dans lequel lesdits effluents de combustion ont une vitesse superficielle en sortie de la zone de désulfuration comprise entre 2 et 20 m/s.

5. Procédé selon l'une des revendications 1 à 4 dans lequel les particules d'absorbant frais sont à une température sensiblement voisine de la température ambiante et dans lequel les particules d'absorbant recyclées sont à une température comprise entre la température ambiante et 400°C et de préférence entre 50 et 150°C.

6. Procédé selon l'une des revendications 1 à 5 dans lequel on recycle les particules en présence de vapeur.

7. Procédé selon l'une des revendications 1 à 6, dans lequel les particules d'absorbant sont recyclées à un débit compris entre 0,01 et 15 fois le débit d'absorbant frais.

8. Dispositif pour la mise en oeuvre du procédé, selon l'une des revendications 1 à 7 comprenant une chambre (1) de combustion avec une sortie (5), des moyens de combustion (2) d'un combustible dans ladite chambre de combustion, des premiers moyens de récupération de chaleur (4) dans ladite chambre de combustion, une chambre de désulfuration (8) avec une entrée (7) reliée à la sortie (5) de la chambre de combustion et une sortie (14), une chambre de récupération de chaleur (16) reliée à la sortie (14) de la chambre de désulfuration ayant une sortie (21) et une chambre de séparation (22) d'un effluent gazeux désulfuré des particules d'absorbant au moins en partie usagées, reliée à la sortie (21) de la chambre de récupération de chaleur, la chambre de désulfuration ayant au moins une paroi (13) commune avec la chambre de combustion et au moins une paroi (15) commune avec la chambre de récupération de chaleur (16), ladite entrée (7) de la chambre de désulfuration comprenant des moyens d'alimentation (10) en particules d'absorbant frais et des moyens (9) pour induire de la turbulence dans la circulation des particules, le dispositif étant caractérisé en ce qu'il comporte des moyens (40,41,10) de recyclage de particules d'absorbant au moins en partie usagées à l'entrée (7) de la chambre de désulfuration et des moyens (43,40) d'ajustement et de contrôle du débit de particules d'absorbant recyclées et du débit de particules d'absorbant frais.

9. Dispositif selon la revendication 8, dans lequel les moyens de recyclage comprennent au moins une vanne (40) de régulation de débit reliée à la sortie de la chambre de séparation (22) et/ou à une sortie d'une enceinte (25) de stockage et/ou à une sortie inférieure de la chambre de récupération de chaleur (16), ladite vanne étant reliée à au moins un injecteur de particules (10) par un conduit de liaison 41.

10. Dispositif selon les revendications 8 et 9, dans lequel les moyens d'ajustement et de contrôle du débit de particules d'absorbant usagées comprennent des moyens d'asservissement (43) reliés à une sonde de température (46) dans la chambre de désulfuration (8) et à la vanne de régulation (40) de débit de particules.

## Patentansprüche

1. Verfahren zur Erzeugung von Wärme bei verminderten Emissionen von Schwefeloxyden, Stickstoffoxyden und brennbaren unverbrandten Verbindungen, bei dem man
a) eine Verbrennung einer variablen Menge eines Schwefel und Stickstoff enthaltenden Brennstoffs in einer Verbrennungszone durchführt, die eine Wärmeaustauscherzone umfaßt, in der man wenigstens zum Teil Wärme entzieht, wobei die Verbrennung durchgeführt wird in Anwesenheit eines Sauerstoff enthaltenden Gases unter Bedingungen, die im wesentlichen nahe der Stoechiometrie der Verbrennung sind und man Verbrennungsabströme bei einer Temperatur zwischen 800 ° und 1200 °C gewinnt;
b) man die Verbrennungsabströme und Partikel eines frischen Absorptionsmittels, das wenigstens eine basische Verbindung eines Erdalkalimetalls umfaßt, in wenigstens eine Turbulenzzone vor einer Entschwefelungszone einführt, wobei diese Partikel eine Granolometrie von 1 bis 100 micrometer und ein spezifisches Volumen zwischen 500 und 4000 kg/m³ aufweisen;
c) man in der Entschwefelungszone eine Entschwefelung dieser Abströme in Anwesenheit dieser Partikel im Transportbett bei einer Temperatur zwischen 750 °C und 1000 °C und in einer oxydierenden Atmosphäre unter Bedingungen derart vornimmt, daß der Gehalt an Sauerstoff am Austritt aus der Entschwefelungszone zwischen 0,1 und 5 Volumenprozent ist und man ein diese Partikel umfassendes Gemisch erzeugt, das schwefelhaltige Entschwefelungsverbindungen und einen entschwefelten gasförmigen Abstrom umfaßt;
d) man dieses Gemisch in eine Wärmegewinnungszone schickt, wenigstens zum Teil Wärme entzieht und ggfs. wenigstens einen Teil der absorbierenden Partikel gewinnt und
e) das aus der Stufe d) stammende Gemisch in einer Trennzone trennt und einerseits den gasförmigen, wenigstens zum Teil gekühlten Abstrom, der vom größeren Teil der Schwefeloxyde, Stickstoffoxyde und unverbrannten brennbaren Verbindungen befreit ist und andererseits diese Absorptionsmittelpartikel abzieht, die wenigstens einen Teil dieser schwefelhaltigen Verbindungen umfassen,
wobei dieses Verfahren sich dadurch auszeichnet, daß man in die Stufe b) wenigstens einen Teil der aus der Stufe e) und ggfs. der Stufe d) stammenden Absorptionsmittelpartikel vor der Turbulenzzone abzieht und den Durchsatz der Partikel frischen Absorptionsmittels und den Durchsatz der in Stufe b) rezyklisierten Partikel als Funktion der Menge verbrannten Brennstoffs in der Verbrennungszone derart einstellt, daß die Temperatur der Entschwefelungskammer zwischen 750 und 1000 °C gehalten wird.

2. Verfahren nach Anspruch 1, bei dem die Konzentration an frischem und in die Entschwefelungszone rezyklisierten Partikel zwischen 0,02 und 1 kg/Nm³ und vorzugsweise zwischen 0,05 und 0,2 kg/Nm³ an Abströmen insgesamt beträgt.

3. Verfahren nach den Ansprüchen 1 oder 2, bei dem die Verweilzeit der Partikel in der Entschwefelungszone 0,5 bis 10 sec und vorzugsweise 1 bis 2 sec beträgt.

4. Verfahren nach einem der Ansprüche 1 bis 3, bei dem diese Verbrennungsabströme eine Oberflächengeschwindigkeit am Austritt aus der Entschwefelungszone zwischen 2 und 20 m/sec haben.

5. Verfahren nach einem der Ansprüche 1 bis 4, bei dem die Partikel frischen Absorptionsmittels sich auf einer Temperatur befinden, die im wesentlichen benachbart der Umgebungstemperatur ist und bei dem die rezyklisierten Absorptionsmittelpartikel sich auf einer Temperatur zwischen der Umgebungstemperatur und 400 °C und vorzugsweise zwischen 50 und 150 °C befinden.

6. Verfahren nach einem der Ansprüche 1 bis 5, bei dem man die Partikel in Anwesenheit von Wasserdampf rezyklisiert.

7. Verfahren nach einem der Ansprüche 1 bis 6, bei dem die Absorptionsmittelpartikel bei einem Durchsatz zwischen dem 0,01-und 15-fachen des Durchsatzes frischen Absorptionsmittels rezyklisiert werden.

8. Vorrichtung zur Durchführung des Verfahrens nach einem der Ansprüche 1 bis 7, umfassend: eine Verbrennungskammer (1) mit einem Ausgang (5), Verbrennungsmittel (2) eines Brennstoffs in dieser Brennkammer, erste Wärmegewinnungsmittel (4) in dieser Brennkammer, eine Entschwefelungskammer (8) mit einem mit dem Ausgang (5) der Brennkammer verbundenen Eingang (7), sowie einem Ausgang (14), eine Wärmerückgewinnungskammer (16), die am Ausgang (14) der Entschwefelungskammer angeordnet ist und über einen Ausgang (21) verfügt und eine Trennkammer (22) eines entschwefelten Abstroms der Absorptionsmittelpartikel, die wenigstens zum Teil verbraucht sind, verbunden mit dem Ausgang (21) der Wärmerückgewinnungskammer, wobei die Entschwefelungskammer wenigstens eine Wandung (13) gemeinsam mit der Brennkammer und wenigstens eine Wandung (15) gemeinsam mit der Wärmerückgewinnungskammer (16) hat, wobei dieser Eingang (7) aus der Entschwefelungskammer Speisemittel (10) an Partikeln frischen Absorptionsmittels umfaßt, sowie Mittel (9), um Turbulenz in die Zirkulation der Partikel zu induzieren, wobei die Vorrichtung dadurch gekennzeichnet ist, daß sie Mittel (40, 41, 10) zum Rezyklisieren von wenigstens zum Teil verbrauchten Absorptionsmittelpartikeln umfaßt, an den Eingang (7) der Entschwefelungskammer, sowie Mittel (43, 40) zum Einstellen und zum Regeln des Durchsatzes an rezyklisierten Absorptionsmittelpartikeln und des Durchsatzes an Partikeln frischen Absorptions mittels.

9. Vorrichtung nach Anspruch 8, bei dem die Rezyklisierungsmittel wenigstens ein Durchsatzsteuerventil (40) umfassen, das mit dem Ausgang der Trennkammer (22) und/oder mit einem Austritt eines Speichergefässes (25) und/oder einem unteren Austritt der Wärmerückgewinnungskammer (16) verbunden ist, wobei das Ventil mit wenigstens einem Injektor für Partikel (10) über eine Verbindungsleitung (41) verbunden ist.

10. Vorrichtung nach den Ansprüchen 8 und 9, bei der die Einstell- und Durchsatzregelmittel für die Partikel verbrauchten Absorptionsmittels Regelmittel (43) umfassen, die mit einer Temperatursonde (46) in der Entschwefelungskammer (8) und mit dem Steuerventil (40) für den Partikeldurchsatz verbunden sind.

## Claims

1. A method of generating heat with reduced emissions of sulphur oxides, nitrogen oxides and unburnt combustible compounds, wherein
a) combustion of a variable quantity of a fuel containing sulphur and nitrogen is effected in a combustion zone comprising a heat exchange zone, in which heat is at least partly extracted, said combustion being effected in the presence of a gas containing oxygen, under conditions substantially close to the combustion stoichiometry, and the combustion effluent is recovered at a temperature from 800 to 1200°C,
b) the combustion effluent and particles of a fresh absorbent, containing at least one basic compound of an alkaline earth metal, are fed into at least one turbulent zone upstream of a desulphurisation zone, said particles being from 1 to 100 microns in size and having a density of 500 to 4000 kg/m³,
c) said effluent is desulphurised in a desulphurisation zone, in the presence of said particles, in a untrained bed
at a temperature from 750 to 1000°C and in an oxidising atmosphere, under conditions such that the oxygen content at the outlet from the desulphurisation zone is from 0.1 to 5% by volume, and a mixture is produced, containing said particles comprising sulphur compounds from desulphurisation and a desulphurised gaseous effluent,
d) said mixture is passed into a heat recovery zone, heat is at least partly extracted, and at least part of the absorbent particles is possibly recovered,
e) the mixture resulting from stage d) is separated in a separation zone, the at least partly cooled gaseous effluent, freed from most of the sulphur oxides, nitrogen oxides and unburnt combustible compounds, is discharged, and said particles of absorbent comprising at least part of said sulphur compounds are also discharged,
characterised in that at least part of the particles of absorbent emanating from stage e) and possibly from stage d) is recycled to stage b), upstream of the turbulent zone, and the flow rate of fresh absorbent particles and that of recycled particles are adjusted to bring the tenperature of the desulphurisation chamber to 750 to 1000°C.

2. The method of Claim 1, wherein the concentration of fresh and recycled particles in the desulphurisation zone is from 0.02 to 1 kg/Nm3 and preferably from 0.05 to 0.2kg/Nm3 of total effluent.

3. The method of Claim 1 or 2, wherein the dwell time of the particles in the desulphurisation zone is from 0.5 to 10 second and preferably from 1 to 2 seconds.

4. The method of any of Claims 1 to 3, wherein said combustion effluent has a surface velocity of 2 to 20 m/s at the outlet from the desulphurisation zone.

5. The method of any of Claims 1 to 4, wherein the particles of fresh absorbent are at a temperature substantially close to ambient temperature.

6. The method of any of Claims 1 to 5, wherein the recycled absorbent particles are at a temperature from ambient temperature to 400°C and preferably from 50 to 150°C.

7. The method of any of Claims 1 to 6, wherein the particles of absorbent are recycled at a flow rate from 0.01 to 15 times that of the fresh absorbent.

8. Apparatus for carrying out the method of Claim 1 , comprising a combustion chamber (1) with an outlet (5), means (2) for burning a fuel in said combustion chamber, first means (4) for recovering heat in said oonbustion chamber, a desulphurisation chamber (8) with an inlet (7) connected to the outlet (5) of the contusion chamber and an outlet (14), a heat recovery chamber (16) connected to the outlet of the desulphurisation chamber with an outlet (21) and a chamber (22) for separating a desulphurised gaseous effluent from the at least partly used particles of absorbent, connected to the outlet (21) of the heat recovery chamber; the desulphurisation chamber having at least one wall (13) in common with the combustion chamber and at least one wall (15) in common with the heat recovery chamber (16), said inlet (7) of the desulphurisation chamber having means (10) for supplying with particles of fresh absorbent and means (9) for inducing turbulence in the circulating particles, characterised in that it comprises means (40, 41, 10) for recycling at least partly used particles of absorbent to the inlet (7) of the desulphurisation chamber, and means (43, 40) for adjusting and controlling the flow rate of recycled particles of absorbent.

9. The apparatus of Claim 8, wherein the recycling means comprise at least one flow rate regulating valve (40), connected to the outlet of the separating chamber (22) and/or to an outlet of a storage chamber (25) and/or to an outlet in the lower part of the heat recovery chamber (16), said valve being connected to at least one particle injector (10) by a pipe (41).

10. The apparatus of Claims 8 and 9, wherein the means for adjusting and controlling the flow rate of used particles of absorbent comprise control means (43) connected to a temperature probe (46) in the desulphurisation chamber and to a valve (40) for regulating the flow rate of particles.
